# EUROPÄISCHE PATENTANMELDUNG

(11) **EP 4 462 854 A1**
(43) Veröffentlichungstag der Anmeldung: **13.11.2024**
(21) Anmeldenummer: 23173064.9
(22) Anmeldetag: 12.05.2023
(51) Int. Cl.: H04W 24/04, H04W 8/20, H04W 36/00

(54) **TECHNIKEN ZUR ÜBERBRÜCKUNG EINES AUSFALLS EINER ERSTEN KOMMUNIKATIONSVERBINDUNG**

(71) Anmelder: Deutsche Telekom AG, 53113 Bonn (DE)
(72) Erfinder: Minow, Jascha, 64625 Bensheim (DE); STROHMER, Petra, Gernsheim (DE); HENZE, Thomas, 53173 Bonn (DE); KEHL, Andreas, Mühltal (DE); Bogenfeld, Eckard, 67316 Carlsberg (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zur Überbrückung eines Ausfalls einer ersten Kommunikationsverbindung, wobei die erste Kommunikationsverbindung auf einer Festnetzverbindung basiert umfassend die folgenden Schritte:
• Bereitstellen eines Datenaustauschs für einen Service an eine erste Kommunikationseinheit mittels der ersten Kommunikationsverbindung, wobei die erste Kommunikationsverbindung zumindest abschnittsweise von einem ersten Netzwerkbetreiber betrieben wird;
• Vorhalten eines eSIM Profils und einer zweiten Kommunikationsverbindung, wobei die zweite Kommunikationsverbindung auf einem Mobilfunk basiert und das eSIM Profil einen Datenaustausch über die zweite Kommunikationsverbindung für den Service ermöglicht;
• Detektieren eines Ausfalls oder einer Ausfallwahrscheinlichkeit der ersten Kommunikationsverbindung;
• Aktivieren des eSIM Profils und Nutzung der zweiten Kommunikationsverbindung für den Service bei einem Ausfall der ersten Kommunikationsverbindung oder wenn die Ausfallwahrscheinlichkeit der ersten Kommunikationsverbindung über einem Grenzwert liegt.

## Beschreibung

Die vorliegende Erfindung betrifft das technische Gebiet von Techniken zur Überbrückung eines Ausfalls einer ersten Kommunikationsverbindung und insbesondere ein dementsprechendes Verfahren, ein Kommunikationssystem und eine Kommunikationseinheit.

Verschiedene Netzwerkbetreiber bieten Kunden verschiedenartige Möglichkeiten an Kommunikationsverbindungen zu nutzen und Daten auszutauschen. Hierbei ist es in der Regel vorteilhaft, wenn alle diese verschiedenartigen Kommunikationsverbindungen von einem einzigen Netzwerkbetreiber bereitgestellt werden, da dieser dann über sämtliche Zugangsinformationen des Nutzers oder Kunden verfügt und insbesondere flexibel zwischen den verschiedenen Kommunikationsverbindungen wechseln kann.

Allerdings ist es häufig nicht der Fall, dass alle diese Kommunikationsverbindungen, die der Nutzer verwendet, aus der Hand eines einzigen Netzwerkbetreibers stammen. Beispielsweise kann es vorkommen, dass der Nutzer sein Festnetz und den Internetanschluss zu Hause von einem ersten Netzwerkbetreiber bezieht, wohingegen sein Mobilfunkvertrag von einem zweiten Netzwerkbetreiber bereitgestellt wird.

Diese Problematik soll nun nochmal anhand eines ganz konkreten Beispiels erläutert werden. Der Festnetzkunde eines ersten Netzwerkbetreibers besitzt einen Mobilfunkvertrag von einem zweiten Netzwerkbetreiber. Dies schränkt die Möglichkeiten des ersten Netzwerkbetreibers ein, dem Nutzer Dienste über alle prinzipiell verfügbaren Netze und Kommunikationsverbindungen zur Verfügung zu stellen. Im vorliegenden Beispielfall bezieht der Nutzer sein xDSL von dem ersten Netzwerkbetreiber, seinen Mobilfunk jedoch von dem zweiten Netzwerkbetreiber. Fällt nun die xDSL Verbindung im Heimnetzwerk des Kunden aus, kann der erste Netzwerkbetreiber nicht sofort Ersatz für die ausgefallene Verbindung über Mobilfunk bereitstellen, da der Nutzer seinen Mobilfunkvertrag bei dem zweiten Netzwerkbetreiber abgeschlossen hat. Schaut der Nutzer also zum Beispiel gerade im Fernsehen (wobei die Videodaten des Fernsehers über die xDSL Verbindung bereitgestellt werden) ein Elfmeterschießen bei einer Fußballweltmeisterschaft, könnte er die entscheidenden Momente verpassen, wenn seine xDSL Verbindung ausfällt. Zusätzlich wird es durch die komplizierten Rechteverwertungen erschwert, dem Nutzer - beispielsweise auf dessen Mobilgerät - vermittels des zweiten Netzwerkbetreibers Zugriff auf die entsprechenden Inhalte zu gewähren, da eventuell nur der erste Netzwerkbetreiber auf die entsprechenden Inhalte zurückgreifen darf. In einer solchen Situation schaut der Kunde im wahrsten Sinne des Wortes in die Röhre bzw. auf einen dunklen Bildschirm.

Der vorliegenden Erfindung liegt daher die Aufgabe zu Grunde Techniken zur Überbrückung eines Ausfalls einer ersten Kommunikationsverbindung bereitzustellen, und somit die eingangs genannten Nachteile des Stands der Technik zumindest zum Teil zu beseitigen.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Überbrückung eines Ausfalls einer ersten Kommunikationsverbindung angegeben, wobei die erste Kommunikationsverbindung auf einer Festnetzverbindung basiert, wobei das Verfahren die folgenden Schritte umfasst:
- Bereitstellen eines Datenaustauschs für einen Service an eine erste Kommunikationseinheit mittels der ersten Kommunikationsverbindung, wobei die erste Kommunikationsverbindung zumindest abschnittsweise von einem ersten Netzwerkbetreiber betrieben wird;
   ∘ die erste Kommunikationsverbindung kann beispielsweise von dem ersten Netzwerkbetreiber als Festnetzanschluss, beispielsweise als xDSL, zu einem Router eines Nutzers gesendet werden, wobei der Router den xDSL Anschluss in dem durch den Router bereitgestellten Heimnetzwerk des Nutzers sowohl als LAN und oder WiFi Verbindung für den Service bereitstellen kann. In diesem Sinne ist zu verstehen, dass die erste Netzwerkverbindung auf einer Festnetzverbindung basiert, da diese von dem ersten Netzwerkbetreiber als Festnetzverbindung zu dem Router angeliefert wird;
   ∘ prinzipiell ist es möglich (je nach Art des Service), dass der Service auf dem Router läuft. In diesem Fall kann der Router die Kommunikationseinheit ausbilden. Typischerweise dürfte es allerdings der Fall sein, dass der Router, wie vorstehend beschrieben die den Service betreffenden Daten an die Kommunikationseinheit weiterleitet, auf der der Service läuft. Typischerweise handelt es sich hierbei, um einen Computer, ein Fernseher, ein Tablett oder ein Smartphone.
- Vorhalten eines eSIM Profils und einer zweiten Kommunikationsverbindung, wobei die zweite Kommunikationsverbindung auf einem Mobilfunk basiert und das eSIM Profil einen Datenaustausch über die zweite Kommunikationsverbindung für den Service ermöglicht;
   ∘ die zweite Kommunikationsverbindung weist also zumindest abschnittsweise eine Kommunikationsstrecke auf, die als Mobilfunk ausgebildet ist. Mittels der zweiten Kommunikationsverbindung kann also direkt mit der Kommunikationseinheit oder einer Kommunikations-Vermittlungseinheit ein Datenaustausch, insbesondere zum Betreiben des Service, erfolgen. Es ist aber auch möglich, dass beispielsweise der Router die Daten per Mobilfunk bezieht, diese Daten dann via LAN und/oder via WiFi an die Kommunikationseinheit zum Betreiben des Service bereitstellt; in diesem Sinne ist die zweite Kommunikationsverbindung logisch unabhängig von der ersten Kommunikationsverbindung;
- Detektieren eines Ausfalls oder einer Ausfallwahrscheinlichkeit der ersten Kommunikationsverbindung;
   ∘ der Ausfall der ersten Kommunikationsverbindung kann durch geeignete Überwachungsmittel des ersten Netzwerkbetreibers detektiert werden. Ebenfalls kann der erste Netzwerkbetreiber eine Ausfallwahrscheinlichkeit der ersten Kommunikationsverbindung ermitteln, insbesondere indem der Netzwerkbetreiber eine trainierte künstliche Intelligenz einsetzt, die die Funktionsfähigkeit seines Netzwerks analysiert und einen entsprechenden Wahrscheinlichkeitsscore ausgibt, mit dem es zum Ausfall der ersten Kommunikationsverbindung kommen kann. Die künstliche Intelligenz kann demnach trainiert werden, indem dieser Netzwerksituationen bekannt gemacht werden, bei denen es zu einem Ausfall der ersten Kommunikationsverbindung kam und mit solchen Datensätzen bei denen es nicht zum Ausfall der ersten Kommunikationsverbindung kam, wobei diese beiden Datensätze im Trainings-Prozess der künstlichen Intelligenz noch entsprechend als Ausfallssituation oder nicht-Ausfallssituation markiert werden;
   ∘ der Ausfall der ersten Kommunikationsverbindung und/oder der drohende Ausfall der ersten Kommunikationsverbindung kann auch durch die Kommunikationseinheit und/oder den Router ermittelt werden. Im Falle des Ausfalls, wird z.B. detektiert, dass kein Datenaustausch mehr stattfindet. Der drohende Ausfall kann dadurch gekennzeichnet sein, dass die QoS Werte mit der Zeit, insbesondere innerhalb einer kurzen Zeitspanne von etwa 10 Sekunden, eine deutlich schlechtere Performance aufweisen;
   ∘ die Detektion des drohenden Ausfalls der ersten Kommunikationsverbindung hat den Vorteil, dass schon geeignete Maßnahmen ergriffen werden können, bevor die erste Kommunikationsverbindung ausfällt. Insbesondere kann in diesem Fall das (nachstehend noch weiter erläuterte) eSIM Profil noch über die erste Kommunikationsverbindung zu der Kommunikationseinheit und/oder dem Router gesendet werden. Ein weiterer Vorteil ist es, dass sich die an dem Service beteiligten Geräte auf einen Handover von der ersten Kommunikationsverbindung zu der zweiten Kommunikationsverbindung vorbereiten können;
- Aktivieren des eSIM Profils und Nutzung der zweiten Kommunikationsverbindung für den Service bei einem Ausfall der ersten Kommunikationsverbindung oder wenn die Ausfallwahrscheinlichkeit der ersten Kommunikationsverbindung über einem Grenzwert liegt.
   ∘ der Datenaustausch zwischen der Kommunikationseinheit und/oder dem Router zum Betreiben des Service erfolgt dann über die zweite Kommunikationsverbindung.
   ∘ hierdurch wird in vorteilhafter Weise sichergestellt, dass der Service auch noch genutzt werden kann, wenn die erste Kommunikationsverbindung ausfällt oder wenn der Ausfall der ersten Kommunikationsverbindung droht; zusätzlich ist aber auch sichergestellt, dass das eSIM Profil nur in diesen Fällen genutzt wird;
   ∘ in diesem Sinne kann das eSIM gewissermaßen als eine Art Ersatzprofil betrachtet werden;
   ∘ der Vorteil des erfindungsgemäßen eSIM Profils gegenüber einer herkömmlichen SIM Karte ist, dass das eSIM Profil flexibel erzeugt und/oder wieder gelöscht werden kann. Ebenfalls ist es möglich, dass eSIM Profil flexibel auf verschiedene Service Use-Cases hin anzupassen, da in der Regel verschiedenartige Services auf der Kommunikationseinheit betrieben werden können; beispielsweise wird für einen Service zum Streaming von Videos ein anderes Anforderungsprofil als für einen Service zum Abwickeln von Bankgeschäften benötigt;

In einer bevorzugten Ausgestaltung ist das eSIM Profil dem ersten Netzwerkbetreiber zugeordnet.

Dies hat den Vorteil, dass der erste Netzwerkbetreiber, wie vorstehend schon erwähnt, über einen möglichst großen Datenpool des Nutzers verfügt und daher flexibel zwischen den verschiedenen Verbindungen hin- und herschalten kann. Desweiteren bietet dieses Merkmal den Vorteil, dass der erste Netzwerkbetreiber am besten feststellen kann, wenn die erste Kommunikationsverbindung ausgefallen ist oder wenn ein Ausfall der ersten Kommunikationsverbindung droht. Ein weiterer Vorteil ist, dass dadurch die Situation behoben werden kann, wenn der Service aus rechtlichen Gründen nur vermittels des ersten Netzwerkbetreibers zugänglich ist.

Bevorzugt ist der erste Netzwerkbetreiber für einen Datenaustausch mit dem Service ausgebildet. Insbesondere kann der Service von dem ersten Netzwerkbetreiber betrieben werden.

Auch ist dies vorteilhaft für den vorstehend beschriebenen Fall, dass der Service aus rechtlichen Gründen nur über den ersten Netzwerkbetreiber abrufbar ist. Desweiteren kann dies den Vorteil haben, dass der Netzwerkbetreiber einen verschlüsselten Datenaustausch mit dem Service bereitstellt, wobei die Schlüssel schon im Vorfeld ausgetauscht wurden und insbesondere für einen weiteren Netzwerkbetreiber nicht zugänglich sind.

Das eSIM Profil kann bereits vor der Nutzung des Service, insbesondere ab Werk, auf der Kommunikationseinheit hinterlegt sein.

Dies hat den Vorteil, dass das eSIM Profil, bevorzugt ein bestimmtes Standard eSIM Profil, jederzeit auf der Kommunikationseinheit verfügbar ist und nicht extra übermittelt werden muss, was insbesondere dann Schwierigkeiten bereiten kann, wenn die erste Kommunikationsverbindung schon ausgefallen ist. Es kann beispielsweise möglich sein, dass der Kunde dieses eSIM Profil beim Kauf der Kommunikationseinheit quasi hinzukauft. Dies deckt aber auch den Fall ab, dass der Kunde das eSIM Profil beispielsweise auf eine Webseite des ersten Netzwerkbetreibers für seine Kommunikationseinheit zu einem beliebigen Zeitpunkt seiner Wahl bestellen und dort hinterlegen kann. Die Kommunikationseinheit kann dann erkennen, dass die erste Kommunikationsverbindung ausgefallen ist und automatisiert in diesem Fall das eSIM Profil zum Aufbau der zweiten Kommunikationsverbindung nutzen.

In einer bevorzugten Ausführungsform wird das eSIM Profil, insbesondere bei einem Ausfall der ersten Kommunikationsverbindung oder wenn die Ausfallwahrscheinlichkeit der Kommunikationsverbindung über einem Grenzwert liegt, von einem Router oder dem ersten Netzwerkbetreiber erzeugt. Insbesondere wird das eSIM Profil im Hinblick auf den genutzten Service erzeugt.

Dies hat den zum einen Vorteil, dass es nicht nötig ist, eine Vielzahl von eSIM Profilen vorzuhalten und diese alle auf den entsprechenden Kommunikationseinheiten für den Fall des Ausfalls der ersten Kommunikationsverbindung zu hinterlegen, sondern das situativ angepasst das eSIM Profil nur dann erzeugt wird, wenn die Kommunikationsverbindung ausfällt oder deren Ausfall mit einer hohen Wahrscheinlichkeit droht. Desweiteren hat dies den Vorteil, dass verschiedene Services verschiedene Anforderungen, insbesondere QoS-Anforderungen, aufweisen können. Wenn das eSIM Profil dynamisch erstellt wird, können die entsprechenden benötigten QoS-Anforderungen des Service, inklusive die schon ausgetauschten Verschlüsselungstechniken, berücksichtigt werden, um eine angepasste zweite Kommunikationsverbindung aufbauen und bereitstellen zu können.

Vorzugsweise wird das eSIM Profil bei einem Ausfall der ersten Kommunikationsverbindung oder wenn die Ausfallwahrscheinlichkeit der Kommunikationsverbindung über einem Grenzwert liegt an die Kommunikationseinheit und/oder an eine Kommunikations-Vermittlungseinheit übertragen.

Dies hat den Vorteil, dass der entsprechende Datentransfer nur dann ausgeführt wird, wenn dieser wirklich notwendig ist. In diesem Zusammenhang wird als eine Kommunikations-Vermittlungseinheit eine solche Einheit verstanden, die technisch in der Lage ist direkt Daten über den Mobilfunk der zweiten Kommunikationsverbindung zu empfangen und diese an die Kommunikationseinheit, insbesondere in der Form eines Hotspots, weiterzuleiten.

Der Nutzer oder der Netzwerkbetreiber haben hierbei die Möglichkeit den Grenzwert flexibel festzulegen, insbesondere basierend auf der Art des Service. Zum weiteren hat das Versenden unter den vorgenannten Bedingungen den Effekt, dass der Datentransfer reduziert wird und die Anschlussnummern der entsprechenden eSIM nicht unnötigerweise im Vorfeld vergeben werden, da deren Anzahl begrenzt ist. Die Kommunikations-Vermittlungseinheit kann als Hotspot für die Kommunikationseinheit verwendet werden.

In einer Ausführungsform wird für die Kommunikationseinheit und/oder für alle in der Netzwerkumgebung vorhandenen Kommunikations-Vermittlungseinheiten ein Netzwerk-Performance Score berechnet, wobei das eSIM Profil der Einheit mit dem besten Netzwerk-Performance Score zur Verfügung gestellt wird.

Dies hat den Vorteil, dass das eSIM Profil der Einheit zur Verfügung gestellt wird, die mit der höchsten Wahrscheinlichkeit in der Lage ist über die zweite Kommunikationsverbindung den Service zuverlässig fortzuführen oder wiederaufzunehmen. Ein konkretes Beispiel. Ist die Kommunikationseinheit ein Fernseher über den gestreamt wird und ist der Fernseher nicht in der Lage ein eSIM Profil zu empfangen (in der Regel besitzen heutige Fernseher kein Mobilfunkmodul), kann die zweite Kommunikationsverbindung nicht direkt über den Fernseher aufgebaut werden. Das eSIM Profil kann aber beispielsweise an ein Smartphone des Nutzers übertragen werden und das Smartphone kann dann als ein Hotspot für den Fernseher dienen und so die zweite Kommunikationsverbindung realisieren. Der Nutzer kann nun aber mehrere Smartphones besitzen, die nicht alle gleich geeignet sind, um - insbesondere in Kombination mit dem Fernseher und/oder dem Service - die zweite Kommunikationsverbindung aufzubauen. Der Netzwerk-Performance Score ist ein Indikator dafür, welches Smartphone also besonders geeignet ist. Das eSIM Profil kann dann automatisiert an dieses Smartphone mit dem besten Netzwerk-Performance Score gesendet werden oder aber diese Information kann dem Nutzer mitgeteilt werden, sodass er dieses Smartphone für das eSIM Profil verwendet.

Vorzugsweise wird das eSIM Profil in der Form von Daten oder in der Form eines QR-Codes an die Kommunikationseinheit oder an die Kommunikations-Vermittlungseinheit übertragen.

Wird das eSIM Profil in der Form von Daten übertragen, kann prinzipiell der ganze Vorgang automatisiert von dem Netzwerkbetreiber gemanagt werden, ohne dass der Nutzer hiervon was mitbekommt und im Idealfall kann der Service ohne Unterbrechung weiter betrieben werden. Der zweite Fall ist beispielsweise in dem vorhergehenden illustrierten Beispiel von Vorteil, wenn die Kommunikationseinheit ein Fernseher ist: Der Netzwerkbetreiber hat unter Umständen keine Kenntnis davon, welche Kommunikations-Vermittlungseinheit dem Nutzer gegenwärtig zur Verfügung steht (dies kann unter Umständen auch von der Ladesituation eines Smartphones abhängen). In diesem Fall kann der QR-Code einfach auf dem Fernseher angezeigt werden und der Nutzer nimmt sich als Kommunikations-Vermittlungseinheit ein Smartphone seiner Wahl, um den angezeigten QR-Code abzufotografieren und somit das eSIM Profil auf das ausgewählte Smartphone zu laden, zu aktivieren und dadurch die zweite Kommunikationsverbindung herzustellen.

Vorzugsweise wird das eSIM Profil bei einem Ausfall der ersten Kommunikationsverbindung über das Mobilfunknetz eines zweiten Netzwerkbetreibers übertragen.

Dies hat den technischen Effekt, dass das eSIM Profil bei der Kommunikationseinheit oder der Kommunikations-Vermittlungseinheit selbst dann ankommen kann, wenn die erste Kommunikationsverbindung nicht mehr verfügbar ist. Hierbei wird die Tatsache ausgenutzt, dass der Nutzer, wenn er eben nicht einen Festnetzvertrag und ein Mobilfunkvertrag bei dem ersten Netzwerkbetreiber besitzt, der Nutzer in der Regel aber ein Mobilfunkvertrag bei dem zweiten Netzwerkbetreiber für sein Smartphone abgeschlossen hat. Gewissermaßen wird hierdurch eine dritte Kommunikationsverbindung ausgenutzt, die zumindest temporär genutzt wird, um das eSIM Profil zu übertragen.

Vorzugsweise wird dem ersten Mobilfunkbetreiber eine Kommunikationsadresse der Kommunikationseinheit oder der Kommunikations-Vermittlungseinheit im Mobilfunknetz des zweiten Netzwerkbetreibers bekannt gemacht. Konkret kann es sich bei der Kommunikationsadresse um die Mobilfunknummer der Kommunikationseinheit oder der Kommunikations-Vermittlungseinheit handeln.

Dies hat den Effekt, dass der erste Mobilfunkbetreiber weiß, wohin er das eSIM Profil senden muss und, dass dieses an der richtigen Einheit ankommt. In einer Ausführungsform kann der Nutzer die Mobilfunk Nummer über ein Internetportal dem ersten Kommunikationsbetreiber bekannt machen.

In einer Ausführungsform weist das eSIM Profil eine temporäre Gültigkeit auf. Die temporäre Gültigkeit kann sich auf einen bestimmten Zeitraum nach der Aktivierung beziehen und/oder auf ein bestimmtes Datumszeitfenster ausgelegt sein.

Dies hat den Vorteil, dass das eSIM Profil nicht dauerhaft, sondern nur zur Überbrückung verwendet werden kann, wenn die erste Kommunikationsverbindung ausfällt oder auszufallen droht. Ein weiterer Vorteil ist, dass dann das entsprechende eSIM Profil nach dem seine Gültigkeit verloren hat, wieder für andere Nutzer verwendet werden kann. In diesem Sinne kann das eSIM Profil quasi recycelt werden. Es kann eine geschäftliche Option sein, dass das eSIM Profil jedes Mal nach dem es seine Gültigkeit verloren hat, von dem Nutzer wieder neu gekauft werden muss. Diesbezüglich können dem eSIM Profil auch ein vorbestimmtes Datenvolumen quasi als aufbrauchbares Budget zugeordnet werden.

In einer Ausführungsform weist das eSIM Profil festlegbare Rechte auf und/oder stellt eine festlegbare QoS-Performance bereit. Insbesondere kann die QoS-Performance und/oder die entsprechenden Rechte basierend auf dem Service festgelegt werden.

Dies hat den Vorteil, dass das eSIM Profil so auf den entsprechenden Service zugeschneidert werden kann, dass dieser zuverlässig weiter betrieben werden kann, wobei der Nutzer aber zeitgleich nicht in der Lage ist mit diesem eSIM Profil darüberhinausgehende Use-cases durchzuführen. Eine weitere Möglichkeit ist es, dass eSIM Profil basierend auf einem Vertrag mit dem Nutzer hin anzupassen. Insbesondere in der 5G Kommunikation ist von Vorteil, die QoS-Performance einer Kommunikationsverbindung im Hinblick auf den Service anzupassen, da hierdurch Netzwerkressourcen besonders effizient genutzt werden können.

Gemäß einem zweiten Aspekt der Erfindung ist eine Kommunikationseinheit angegeben, wobei die Kommunikationseinheit zum Vorhalten eines eSIM Profils, zum Empfang eines eSIM Profils, zum Detektieren eines Ausfalls oder einer Ausfallwahrscheinlichkeit der ersten Kommunikationsverbindung, und/oder zur Aktivierung des eSIM und Nutzung der zweiten Kommunikationsverbindung für den Service bei einem Ausfall eingerichtet ist. Die Kommunikationseinheit ist insbesondere eingerichtet um im Zusammenhang mit dem erfinderischen Verfahren verwendet zu werden. Wie schon vorstehend erläutert ist die erste Kommunikationsverbindung eine Kommunikationsverbindung, die auf einem Festnetzanschluss basiert. Die zweite Kommunikationsverbindung ist, wie schon vorstehend erläutert, eine Kommunikationsverbindung, die auf einen Mobilfunk basiert.

Die Kommunikationseinheit kann ein Router, ein Fernseher, ein Smartphone, ein Computer oder ein Tablett sein. Es ist prinzipiell möglich, dass all die vorgenannten Geräte ein Mobilfunk-Modul aufweisen und somit auch die zweite Kommunikationsverbindung bereitstellen können. Insbesondere auf dem Fernseher, auf dem Smartphone, auf dem Computer oder dem Tablett kann der Service bereitgestellt und ausgeführt werden.

Gemäß einem dritten Aspekt der Erfindung ist eine Kommunikation-Vermittlungseinheit eingerichtet zum Vorhalten eines eSIM Profils, zum Empfang eines eSIM Profils, und/oder zur Aktivierung des eSIM und Nutzung der zweiten Kommunikationsverbindung für den Service bei einem Ausfall angegeben.

Die Kommunikations-Vermittlungseinheit hat den Vorteil, dass durch sie die zweite Kommunikationsverbindung bereitgestellt werden kann, wenn das ursprüngliche Gerät auf dem der Service läuft, kein Mobilfunkmodul aufweist.

Die Kommunikations-Vermittlungseinheit ist insbesondere ein Router mit einem Mobilfunkmodul, ein Tablett mit einem Mobilfunkmodul oder ein Smartphone, welches ohnehin in der Regel ein Mobilfunkmodul aufweist.

Gemäß einem vierten Aspekt der Erfindung ist ein Netzwerbetreiber angegeben, wobei der Netzwerbetreiber wie folgt eingerichtet ist:
- um eine erste Kommunikationsverbindung mit einer Kommunikationseinheit aufzubauen;
   ∘ insbesondere mit der vorstehend beschriebenen Kommunikationseinheit und der vorstehend beschriebenen ersten Kommunikationsverbindung; die erste Kommunikationsverbindung ist also wiederum festnetz-basiert;
- zum Detektieren eines Ausfalls oder einer Ausfallwahrscheinlichkeit der ersten Kommunikationsverbindung;
- zum Erzeugen eines eSIM Profils und zum Bereitstellen des eSIM Profils an eine Kommunikationseinheit bei einem Ausfall der ersten Kommunikationsverbindung oder wenn die Ausfallwahrscheinlichkeit der ersten Kommunikationsverbindung über einem Grenzwert liegt.

Der Netzwerkbetreiber ist insbesondere dazu eingerichtet, eine beliebige Kombination der Schritte des vorstehend beschriebenen Verfahrens auszuführen, wenn diese dem Netzwerkbetreiber technisch zugänglich sind oder wenn es möglich ist, dass Netzwerkbetreiber diese technisch ausführt.

Insbesondere ist der Netzwerkbetreiber dazu eingerichtet, das eSIM Profil im Hinblick auf den Service zu erstellen.

Die Vorteile eines solchen erfindungsgemäßen Netzwerkbetreiber sind im Wesentlichen analog zu denen, die im Zusammenhang mit dem Verfahren beschrieben wurden.

Im Folgenden werden bevorzugte Ausführungsbeispiele der vorliegenden Erfindung unter Bezugnahme auf die begleitenden Figuren erläutert:
- Fig. 1:: zeigt schematisch das Ablaufdiagramm eines erfindungsgemäßen Verfahrens zur Überbrückung eines Ausfalls einer ersten Kommunikationsverbindung.
- Fig. 2:: zeigt ein erfindungsgemäßes Kommunikationssystem, eingerichtet zur Ausführung des erfindungsgemäßen Verfahrens gemäß Fig. 1.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

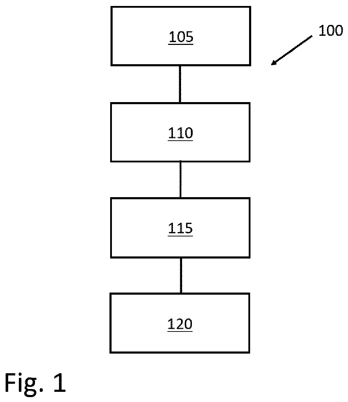

Fig. 1 zeigt schematisch ein Ablaufdiagramm 100 eines erfindungsgemäßen Verfahrens zur Überbrückung eines Ausfalls einer ersten Kommunikationsverbindung 215.
Schritt 105: Bereitstellen eines Datenaustauschs für einen Service 250 an eine erste Kommunikationseinheit 245 mittels der ersten Kommunikationsverbindung 215, wobei die erste Kommunikationsverbindung 215 zumindest abschnittsweise von einem ersten Netzwerkbetreiber 205 betrieben wird;
Schritt 110: Vorhalten eines eSIM Profils 260 und einer zweiten Kommunikationsverbindung 220, wobei die zweite Kommunikationsverbindung 220 auf einem Mobilfunk basiert und das eSIM Profil 260 einen Datenaustausch über die zweite Kommunikationsverbindung 220 für den Service 250 ermöglicht;
Schritt 115: Detektieren eines Ausfalls oder einer Ausfallwahrscheinlichkeit der ersten Kommunikationsverbindung 215;
Schritt 120: Aktivierung des eSIM Profils 260 und Nutzung der zweiten Kommunikationsverbindung 220 für den Service 250 bei einem Ausfall der ersten Kommunikationsverbindung 215 oder wenn die Ausfallwahrscheinlichkeit der ersten Kommunikationsverbindung 215 über einem Grenzwert liegt.

Die Reihenfolge der Schritte kann, sofern dies technisch möglich ist, auch beliebig vertauscht werden.

Dies ermöglicht also, dass der Service auch bei einem Ausfall der ersten Kommunikationsverbindung 215 weiter nutzbar ist.

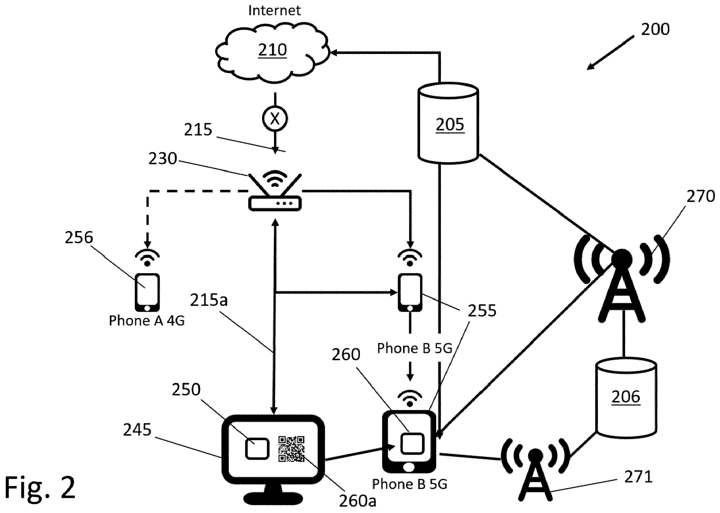

Fig. 2 zeigt ein erfindungsgemäßes Kommunikationssystem 200, eingerichtet zur Ausführung des erfindungsgemäßen Verfahrens gemäß Fig. 1.

Ein erster Netzwerkbetreiber 205 stellt über das Internet 210 vermittels eines Festnetzanschlusses 215, insbesondere eines xDSL Anschlusses 215, die erste Kommunikationsverbindung 215 für einen Nutzer bereit. Die erste Kommunikationsverbindung 215 ist datenleitend mit einem Router 230 des Nutzers verbunden, wobei der Router 230 die über die erste Kommunikationsverbindung 115 eingehenden Daten entweder kabelgebunden oder via WiFi dem Heimnetzwerk des Nutzers zur Verfügung stellen kann.

Im vorliegenden Fall wird beispielhaft angenommen, dass der Router 230 die Daten durch sein WLAN 215a bereitstellt. Auf der Kommunikationseinheit 245, vorstehend in der Ausgestaltung eines Fernsehers 245, läuft als Service 250 eine Videostreaming Applikation 250. Zum Abspielen eines Videos tauscht die Videostreaming Applikation 250 Daten über die erste Kommunikationsverbindung 215 aus.

Es kann nun vorkommen, dass die erste Kommunikationsverbindung 215 ausfällt oder droht auszufallen, sodass in diesem Fall das Video nicht mehr abgespielt werden kann.

In diesem Fall kann das Verfahren gemäß Fig. 1 ausgeführt werden. Insbesondere wird das Problem also dadurch gelöst, dass das eSIM Profil 260 bei einem Festnetzausfall einer Kommunikations-Vermittlungseinheit 255, insbesondere ausgebildet als Smartphone 255, oder dem Fernseher 245 zugänglich gemacht wird.

Insbesondere kann dies dadurch realisiert werden, dass das eSIM Profil 260 in der Form eines QR-Codes 260a auf dem Fernseher 245 angezeigt wird. Der Nutzer kann dann vermittels seiner bei dem ersten Netzwerkbetreiber 205 registrierten Telefonnummer, die ihm von einem zweiten (nicht gezeigten) Netzwerkbetreiber zur Verfügung gestellt wird, das eSIM Profil 260 auf sein Smartphone 255 gesendet bekommen.

Alternativ kann der Nutzer aber auch den QR-Code 260a scannen, wodurch der Nutzer in die Lage versetzt wird, das eSIM Profil 260 auf seinem Smartphone 255 zu installieren. Vermittels des eSIM Profils 260 kann die zweite Datenverbindung 220 als Mobilfunkverbindung unter Nutzung einer Basisstation 270 aufgebaut und das Video auf dem Fernseher 245 fortgesetzt werden, indem das Smartphone 255 einen Hotspot für den Fernseher 245 ausbildet. Insbesondere kann das Smartphone 255 ein lokales WLAN 220a bereitstellen.

Nachstehend wird eine weitere Ausführungsform des erfindungsgemäßen Verfahrens beschrieben, wobei dessen Merkmale, wenn technisch möglich, beliebig mit dem vorstehend schon erläuterten Verfahren kombiniert werden kann.

Es liegt wiederum der Fall vor, dass der Nutzer vermittels des Festnetzanschlusses 215 Daten zur Nutzung des Service 250 austauscht, wobei der Festnetzanschluss 215 ausfällt. Bei dem ersten Netzwerkbetreiber 205, der den Festnetzanschluss 215 für den Kunden bereitstellt, hat der Kunde jedoch keinen Mobilfunkvertrag.

Der Router 230 kann eingerichtet sein alle Geräte zu identifizieren, die eine eSIM Funktionalität aufweisen und die aktuell per WiFi mit dem Router 230 verbunden sind. In dem Beispielsfall weisen sowohl der Router 230 als auch das Smartphone 255 und ein weiteres Smartphone 256 eine eSIM Funktionalität auf.

Nun kann überprüft werden, ob eines dieser Geräte 230, 255, 256 einen Mobilfunkvertrag bei dem ersten Netzwerkbetreiber 205 besitzt und über diesen die Mobilfunkverbindung 220 aufbauen kann oder nicht.

Kann eines dieser Geräte 230, 255, 256 vermittels des ersten Netzwerkbetreibers 205 schon die Mobilfunkverbindung 220 aufbauen, kann hierdurch bereits die erste Kommunikationsverbindung 215 überbrückt und der Service 250 weiter betrieben werden.

Kann keines dieser Geräte 230, 255, 256 vermittels des ersten Netzwerkbetreibers 205, also insbesondere im Netz des ersten Netzwerkbetreibers 205, schon die Mobilfunkverbindung 220 herstellen, wird zunächst eine Netzwerk-Performance der Geräte 230, 255, 256 berechnet, um abschätzen zu können, welches dieser Geräte 230, 255, 256 am besten zur Ausbildung der Mobilfunkverbindung 220 geeignet ist.

Beispielsweise unterscheiden sich das Smartphone 255 und das weitere Smartphone 256 dadurch, dass das Smartphone 255 5G-fähig ist und das weitere Smartphone 256 lediglich 4G-fähig ist.

Hierbei kann ein Score berechnet werden, der die Geeignetheit der jeweiligen Geräte 230, 255, 256 quantifiziert. Weitere Parameter, die in die Berechnung des Scores eingehen können sind: Betriebssystem des Gerätes, WiFi Signalstärken, Device Modem Kompatibilitäten, Netzwerkabdeckung am Ort des Fernsehers 245. Für das Gerät 230, 255, 256 mit dem höchsten Score, wird das entsprechende eSIM Profil 260 und optional auch ein entsprechendes VPN Profil generiert, welches auf dem Gerät installiert und zum Aufbau der Mobilfunkverbindung 220 genutzt werden kann. Beispielsweise wurde durch den Score ermittelt, dass das Smartphone 255 oder der Router 230 einen höheren Score als das weitere Smartphone 256 aufweisen und deshalb eines dieser Geräte ausgewählt wird.

Insbesondere kann der Router 230 das entsprechende eSIM Profil 260 und optional auch ein entsprechendes VPN Profil erzeugen und an das Smartphone 255 senden. Es ist allerdings auch möglich, dass der Router 250 das entsprechende eSIM Profil 260 und optional auch das entsprechendes VPN Profil in der Form eines QR-Codes 260a auf dem Bildschirm des Fernsehers 245 darstellt gegebenenfalls mit der Empfehlung, auf welchem Smartphone 255, 256 das eSIM Profil 260 und/oder das entsprechendes VPN Profil installiert werden soll.

Das eSIM Profil 260 und/oder VPN Profil kann auch von dem ersten Netzwerkbetreiber 205 erzeugt werden und unter Kenntnis der Telefonnummer des Smartphones 255 bei einem zweiten Netzwerkbetreiber 206 über das Mobilfunknetz 270 oder über das Mobilfunknetz 271 des zweiten Netzwerksbetreibers 206 direkt an das Smartphone 255 gesendet werden.

Der Nutzer installiert dann das eSIM Profil 260 auf dem Smartphone 255 und kann direkt die zweite Kommunikationsverbindung 220 nutzen. Alternativ oder zusätzlich installiert der Nutzer das eSIM Profil und/oder das VPN Profil auf dem Smartphone 255, welches dann dem Router 230 als Mobilfunkmodem zur Verfügung steht und dem gesamten Heimnetzwerk Internet zur Verfügung stellt.

Insbesondere behält das eSIM Profil 260 seine Gültigkeit bis der Ausfall des Festnetzanschlusses 215 behoben ist. Nach dem Beheben des Ausfalls des Festnetzanschlusses 215 kann das eSIM Profil 260 durch den Netzwerkbetreiber 205 ungültig gemacht werden.

## Patentansprüche

1. Verfahren zur Überbrückung eines Ausfalls einer ersten Kommunikationsverbindung (215), wobei die erste Kommunikationsverbindung (215) auf einer Festnetzverbindung basiert umfassend die folgenden Schritte:
• Bereitstellen eines Datenaustauschs für einen Service an eine erste Kommunikationseinheit (245) mittels der ersten Kommunikationsverbindung (215), wobei die erste Kommunikationsverbindung (215) zumindest abschnittsweise von einem ersten Netzwerkbetreiber (205) betrieben wird;
• Vorhalten eines eSIM Profils (260) und einer zweiten Kommunikationsverbindung (220), wobei die zweite Kommunikationsverbindung (220) auf einem Mobilfunk basiert und das eSIM Profil (260) einen Datenaustausch über die zweite Kommunikationsverbindung (220) für den Service (250) ermöglicht;
• Detektieren eines Ausfalls oder einer Ausfallwahrscheinlichkeit der ersten Kommunikationsverbindung (215);
• Aktivieren des eSIM Profils (260) und Nutzung der zweiten Kommunikationsverbindung (220) für den Service (250) bei einem Ausfall der ersten Kommunikationsverbindung (215) oder wenn die Ausfallwahrscheinlichkeit der ersten Kommunikationsverbindung über einem Grenzwert liegt.

2. Verfahren nach einem der vorhergehenden Ansprüche, **dadurch gekennzeichnet, dass** das eSIM Profil (260) dem ersten Netzwerkbetreiber zugeordnet ist.

3. Verfahren nach Anspruch 2, **dadurch gekennzeichnet, dass** der erste Netzwerkbetreiber für einen Datenaustausch mit dem Service ausgebildet ist.

4. Verfahren nach einem der vorhergehenden Ansprüche, **dadurch gekennzeichnet, dass** das eSIM Profil bereits vor der Nutzung des Service, insbesondere ab Werk, auf der Kommunikationseinheit hinterlegt ist.

5. Verfahren nach einem der vorhergehenden Ansprüche, **dadurch gekennzeichnet, dass** das eSIM Profil, insbesondere bei einem Ausfall der ersten Kommunikationsverbindung oder wenn die Ausfallwahrscheinlichkeit der Kommunikationsverbindung über einem Grenzwert liegt, von dem ersten Netzwerkbetreiber erzeugt wird.

6. Verfahren nach einem der vorhergehenden Ansprüche, **dadurch gekennzeichnet, dass** das eSIM Profil bei einem Ausfall der ersten Kommunikationsverbindung oder wenn die Ausfallwahrscheinlichkeit der Kommunikationsverbindung über einem Grenzwert liegt an die Kommunikationseinheit und/oder an eine Kommunikations-Vermittlungseinheit übertragen wird.

7. Verfahren nach Anspruch 6, **dadurch gekennzeichnet, dass** für die Kommunikationseinheit und/oder für alle in der Netzwerkumgebung vorhandenen Kommunikations-Vermittlungseinheiten ein Netzwerk-Performance Score berechnet wird, wobei das eSIM Profil der Einheit mit dem besten Netzwerk-Performance Score zur Verfügung gestellt wird.

8. Verfahren nach einem der Ansprüche 6 bis 7, **dadurch gekennzeichnet, dass** die Kommunikations-Vermittlungseinheit einen Hotspot für die Kommunikationseinheit bereitstellt.

9. Verfahren nach einem der Ansprüche 6 bis 8, **dadurch gekennzeichnet, dass** das eSIM Profil in der Form von Daten oder in der Form eines QR-Codes an die Kommunikationseinheit oder an die Kommunikations-Vermittlungseinheit übertragen wird.

10. Verfahren nach Anspruch 6 und 9, **dadurch gekennzeichnet, dass** das eSIM Profil bei einem Ausfall der ersten Kommunikationsverbindung über das Mobilfunknetz eines zweiten Netzwerkbetreibers übertragen wird.

11. Verfahren nach Anspruch 10, **dadurch gekennzeichnet, dass** dem ersten Mobilfunkbetreiber eine Kommunikationsadresse der Kommunikationseinheit oder der Kommunikations-Vermittlungseinheit im Mobilfunknetz des zweiten Netzwerkbetreibers bekannt gemacht wird.

12. Verfahren nach einem der vorhergehenden Ansprüche, **dadurch gekennzeichnet, dass** das eSIM Profil nur eine temporäre Gültigkeit aufweist.

13. Verfahren nach einem der vorhergehenden Ansprüche, **dadurch gekennzeichnet, dass** das eSIM Profil festlegbare Rechte und/oder QoS-Performance bereitstellt.

14. Kommunikationseinheit eingerichtet zum Vorhalten eines eSIM Profils, zum Empfang eines eSIM Profils, zum Detektieren eines Ausfalls oder einer Ausfallwahrscheinlichkeit einer ersten Kommunikationsverbindung, und/oder zur Aktivierung des eSIM und Nutzung der zweiten Kommunikationsverbindung für den Service bei einem Ausfall.

15. Kommunikations-Vermittlungseinheit eingerichtet zum Vorhalten eines eSIM Profils, zum Empfang eines eSIM Profils, und/oder zur Aktivierung des eSIM und Nutzung der zweiten Kommunikationsverbindung für den Service bei einem Ausfall.

16. Netzwerbetreiber, wobei der Netzwerbetreiber wie folgt eingerichtet ist:
• um eine erste Kommunikationsverbindung mit einer Kommunikationseinheit aufzubauen;
• zum Detektieren eines Ausfalls oder einer Ausfallwahrscheinlichkeit der ersten Kommunikationsverbindung;
• zum Erzeugen eines eSIM Profils und zum Bereitstellen des eSIM Profils an eine Kommunikationseinheit bei einem Ausfall der ersten Kommunikationsverbindung oder wenn die Ausfallwahrscheinlichkeit der ersten Kommunikationsverbindung über einem Grenzwert liegt.

## Geänderte Patentansprüche

### Geänderte Patentansprüche gemäss Regel 137(2) EPÜ.

1. Verfahren zur Überbrückung eines Ausfalls einer ersten Kommunikationsverbindung (215), wobei die erste Kommunikationsverbindung (215) auf einer Festnetzverbindung basiert umfassend die folgenden Schritte:
• Bereitstellen eines Datenaustauschs für einen Service an eine erste Kommunikationseinheit (245) mittels der ersten Kommunikationsverbindung (215), wobei die erste Kommunikationsverbindung (215) zumindest abschnittsweise von einem ersten Netzwerkbetreiber (205) betrieben wird;
• Vorhalten eines eSIM Profils (260) und einer zweiten Kommunikationsverbindung (220), wobei die zweite Kommunikationsverbindung (220) auf einem Mobilfunk basiert und das eSIM Profil (260) einen Datenaustausch über die zweite Kommunikationsverbindung (220) für den Service (250) ermöglicht;
• Detektieren eines Ausfalls oder einer Ausfallwahrscheinlichkeit der ersten Kommunikationsverbindung (215);
• Aktivieren des eSIM Profils (260) und Nutzung der zweiten Kommunikationsverbindung (220) für den Service (250) bei einem Ausfall der ersten Kommunikationsverbindung (215) oder wenn die Ausfallwahrscheinlichkeit der ersten Kommunikationsverbindung über einem Grenzwert liegt.

2. Verfahren nach einem der vorhergehenden Ansprüche, **dadurch gekennzeichnet, dass** das eSIM Profil (260) dem ersten Netzwerkbetreiber zugeordnet ist.

3. Verfahren nach Anspruch 2, **dadurch gekennzeichnet, dass** der erste Netzwerkbetreiber für einen Datenaustausch mit dem Service ausgebildet ist.

4. Verfahren nach einem der vorhergehenden Ansprüche, **dadurch gekennzeichnet, dass** das eSIM Profil bereits vor der Nutzung des Service, insbesondere ab Werk, auf der Kommunikationseinheit hinterlegt ist.

5. Verfahren nach einem der vorhergehenden Ansprüche, **dadurch gekennzeichnet, dass** das eSIM Profil, insbesondere bei einem Ausfall der ersten Kommunikationsverbindung oder wenn die Ausfallwahrscheinlichkeit der Kommunikationsverbindung über einem Grenzwert liegt, von dem ersten Netzwerkbetreiber erzeugt wird.

6. Verfahren nach einem der vorhergehenden Ansprüche, **dadurch gekennzeichnet, dass** das eSIM Profil bei einem Ausfall der ersten Kommunikationsverbindung oder wenn die Ausfallwahrscheinlichkeit der Kommunikationsverbindung über einem Grenzwert liegt an die Kommunikationseinheit und/oder an eine Kommunikations-Vermittlungseinheit übertragen wird.

7. Verfahren nach Anspruch 6, **dadurch gekennzeichnet, dass** für die Kommunikationseinheit und/oder für alle in der Netzwerkumgebung vorhandenen Kommunikations-Vermittlungseinheiten ein Netzwerk-Performance Score berechnet wird, wobei das eSIM Profil der Einheit mit dem besten Netzwerk-Performance Score zur Verfügung gestellt wird.

8. Verfahren nach einem der Ansprüche 6 bis 7, **dadurch gekennzeichnet, dass** die Kommunikations-Vermittlungseinheit einen Hotspot für die Kommunikationseinheit bereitstellt.

9. Verfahren nach einem der Ansprüche 6 bis 8, **dadurch gekennzeichnet, dass** das eSIM Profil in der Form von Daten oder in der Form eines QR-Codes an die Kommunikationseinheit oder an die Kommunikations-Vermittlungseinheit übertragen wird.

10. Verfahren nach Anspruch 6 und 9, **dadurch gekennzeichnet, dass** das eSIM Profil bei einem Ausfall der ersten Kommunikationsverbindung über das Mobilfunknetz eines zweiten Netzwerkbetreibers übertragen wird.

11. Verfahren nach Anspruch 10, **dadurch gekennzeichnet, dass** dem ersten Mobilfunkbetreiber eine Kommunikationsadresse der Kommunikationseinheit oder der Kommunikations-Vermittlungseinheit im Mobilfunknetz des zweiten Netzwerkbetreibers bekannt gemacht wird.

12. Verfahren nach einem der vorhergehenden Ansprüche, **dadurch gekennzeichnet, dass** das eSIM Profil nur eine temporäre Gültigkeit aufweist.

13. Verfahren nach einem der vorhergehenden Ansprüche, **dadurch gekennzeichnet, dass** das eSIM Profil festlegbare Rechte und/oder QoS-Performance bereitstellt.

14. Kommunikationseinheit eingerichtet zum Vorhalten eines eSIM Profils, zum Empfang eines eSIM Profils, zum Detektieren eines Ausfalls oder einer Ausfallwahrscheinlichkeit einer ersten Kommunikationsverbindung, und zur Aktivierung des eSIM und Nutzung der zweiten Kommunikationsverbindung für den Service bei einem Ausfall oder wenn die Ausfallwahrscheinlichkeit der ersten Kommunikationsverbindung über einem Grenzwert liegt.

15. Kommunikations-Vermittlungseinheit eingerichtet zum Vorhalten eines eSIM Profils, zum Empfang eines eSIM Profils, und zur Aktivierung des eSIM und Nutzung der zweiten Kommunikationsverbindung für den Service bei einem Ausfall oder wenn die Ausfallwahrscheinlichkeit der ersten Kommunikationsverbindung über einem Grenzwert liegt.

16. Netzwerbetreiber, wobei der Netzwerbetreiber wie folgt eingerichtet ist:
• um eine erste Kommunikationsverbindung mit einer Kommunikationseinheit aufzubauen;
• zum Detektieren eines Ausfalls oder einer Ausfallwahrscheinlichkeit der ersten Kommunikationsverbindung;
• zum Erzeugen eines eSIM Profils und zum Bereitstellen des eSIM Profils an eine Kommunikationseinheit bei einem Ausfall der ersten Kommunikationsverbindung oder wenn die Ausfallwahrscheinlichkeit der ersten Kommunikationsverbindung über einem Grenzwert liegt.
